# EUROPEAN PATENT APPLICATION

(11) **EP 4 783 569 A1**
(43) Date of publication of application: **29.07.2026**
(21) Application number: 25196770.9
(22) Date of filing: 20.08.2025
(51) Int. Cl.: H04N 7/14, G06F 13/12, G06F 13/38, H04L 12/12, G06F 3/14

(54) **CONFERENCE SYSTEM INTEGRATING VIDEO, VOICE AND REMOTE COLLABORATION AND METHOD OF OPERATING CONFERENCE SYSTEM**

(30) Priority: 23.01.2025 CN 202510114534
(71) Applicant: Grastron Technology Co., Ltd., Shenzhen City Guangdong Province 518000 (CN)
(72) Inventor: HOU, Haohang, Shenzhen City (Guangdong Province), 518000 (CN)
(74) Representative: Bjerkén Hynell KB

(57) **Abstract**

Provided are a conference system integrating video, voice and remote collaboration, and a method of operating the conference system. A conference peripheral includes a video acquisition device, an audio acquisition device, and an audio playback device. The conference peripheral is connected to a receiving unit through a cable or in a wireless manner, the receiving unit communicates with a user computer through a communication network, and a client software is configured to achieve data sharing, data conversion, conference control and remote collaboration between the receiving unit and a USB peripheral, and the USB peripheral is connected to a USB port of the user computer and communicates with the client software. During communication, received and transmitted data streams, after being converted into UVC and UAC protocols by the USB peripheral device, are provided to the user computer through a UVC interface and a UAC interface, respectively.

## Description

### TECHNICAL FIELD

The present invention relates to the technical field of network communication, and in particular to a conference system integrating video, voice and remote collaboration, and a method of operating the conference system.

### BACKGROUND

The globalization has greatly increased the demand for remote collaboration in various fields. Transnational teams in business need real-time decision-making, education is eagerly required for remote interaction, and medical care is in urgent need of accurate remote consultation. However, the early telephone audio communication lacked visualization, and the traditional face-to-face meeting organization was cumbersome, limited and costly. These limitations highlight the necessity of remote collaboration and efficient communication, and promote the rise of audio conference and video conference technology to meet the requirements for people to communicate anytime and anywhere and promote the development of various industries.

The progress of network technology is the key to the development of audio-video conference. The popularity of broadband, Wi-Fi, 5G and other wireless networks has enabled mass audio and video data to be transmitted quickly and stably, which can reduce the delay, improve communication quality and break through the constraints of regional cables. Meanwhile, standards, such as H.264 and other video coding, advanced audio coding (AAC) and other audio coding, and session initiation protocol (SIP) and other communication protocols, have been continuously improved to ensure the compatibility of device systems, promote the wide application of audio-video conferences, induce various schemes and promote industrial development.

Users are demanding more and more conference experience, pursuing high-definition image quality, stereo audio, low-delay interaction, etc. In order to meet the demand, technology needs to be continuously expanded and innovated. Multi-device fusion makes users to seamlessly switch to participate in the conference, security and privacy protection measures can ensure the security of meeting information, and artificial intelligence fusion can achieve intelligent voice recognition, video analysis and other functions. Fierce market competition urges enterprises to continue to invest in innovation to promote the development of audio and video conference technology in a more efficient, intelligent, convenient and safe direction, thus adapting to market changes and user expectations and playing a greater role in various fields.

### SUMMARY

An objective of the present invention is to provide a conference system integrating video, audio and remote collaboration, and a method of operating the conference system. The multi-functional teleconference experience can be achieved, and the conference efficiency and quality can be improved.

To achieve the objective above, the present invention employs the following technical solution.

In a first aspect, the present invention provides a conference system integrating video, voice and remote collaboration, including receiving unit, a conference peripheral, a display device, a user computer, a universal serial bus (USB) peripheral, and a client software.

The conference peripheral includes a video acquisition device, an audio acquisition device and an audio playback device, and the conference peripheral is connected to the receiving unit through a cable or in a wireless manner.

The display device is connected to the receiving unit through audio and video cables.

The receiving unit communicates with the user computer through a communication network.

The client software runs on the user computer and communicates with the receiving unit; the client software communicates with the USB peripheral through a USB port, and the client software is configured to achieve data sharing, data conversion, conference control and remote collaboration between the receiving unit and the USB peripheral.

The USB peripheral is connected to the USB port of the user computer and communicates with the client software through the USB port. During communication, received and transmitted data streams, after being converted into USB video class (UVC) and USB audio class (UAC) protocols by the USB peripheral device, are provided to the user computer for use through a UVC interface and a UAC interface, respectively.

In one embodiment, the video acquisition device is connected to the receiving unit through a USB cable or a high definition multimedia interface (HDMI) cable. The audio acquisition device is connected to the receiving unit through a USB cable, an audio cable, a wireless audio receiver or a wireless audio transceiver built in the receiving unit. The audio playback device is connected to the receiving unit through a USB cable, an audio cable, a wireless audio receiver, or a wireless audio transceiver built in the receiving unit.

In one embodiment, the conference peripheral includes any one or more selected from a group of a display, a touch screen, a projector, a microphone, a speaker, a camera, a video camera, a web camera, and a photographic camera.

In one embodiment, the USB port includes type interfaces of USB 2.0 series, USB 3.0 series and USB 4.0 series.

In one embodiment, the USB peripheral at least includes a USB mass data communication interface, at least one UVC interface, and at least one UAC interface.

In one embodiment, the USB mass data communication interface includes a wired network interface card, a network driver interface specification (NDIS), an Ethernet control model (ECM), a network control model (NCM), a mass storage, and a human interface device.

In one embodiment, the video acquisition device includes a universal UVC device, or a video acquisition device with an HDMI output.

In one embodiment, the audio acquisition device includes a universal UAC device, an audio acquisition device with a simulated or digital audio input, and an audio playback device with a simulated or digital audio output.

In one embodiment, the video acquisition device and the audio acquisition device are an integrated device, or separated devices.

In a second aspect, the present invention provides a method of operating a conference system integrating video, voice and remote collaboration, including the following steps:
connecting a USB peripheral to a user computer;
opening a mass storage, and running a client software on the mass storage;
controlling the client software to be connected to the receiving unit based on a communication network;
acquiring a data stream of the conference peripheral, and transmitting, by a USB communication interface, the data stream to the USB peripheral, where the data stream comprises image data and audio data;
transmitting the data stream to the user computer according to a general protocol based on the USB peripheral; and
performing data sharing, data conversion, conference control and remote collaboration based on the client software.

According to specific embodiments of the present invention, the present invention has the following technical effects:
The present invention provides a conference system integrating video, voice and remote collaboration and a method of operating the conference system. The conference system includes a receiving unit, a conference peripheral, a display device, a user computer, a USB peripheral, and a client software. The conference peripheral in the system includes a video acquisition device, an audio acquisition device, and an audio playback device. The conference peripheral is connected to a receiving unit through a cable or in a wireless manner, the display device is connected to the receiving unit through audio and video cables, and the receiving unit communicates with the user computer through a communication network. The communication network is composed of a wired Ethernet and a built-in wireless network of the receiving unit. The client software runs on the user computer and communicates with the receiving unit. The client software communicates with the USB peripheral through a USB port, and is configured to achieve data sharing, data conversion, conference control and remote collaboration between the receiving unit and the USB peripheral, and the USB peripheral is connected to the USB port of the user computer and communicates with the client software through the USB port. During communication, received and transmitted data streams, after being converted into UVC and UAC protocols by the USB peripheral device, are provided to the user computer for use through a UVC interface and a UAC interface, respectively. The multi-functional teleconference experience can be achieved, and the conference efficiency and quality can be improved.

### BRIEF DESCRIPTION OF THE DRAWINGS

To describe the technical solutions of the present invention more clearly, the following briefly introduces the accompanying drawings required for describing the embodiments. Apparently, the accompanying drawings in the following description show merely some embodiments of the present invention, and those of ordinary skill in the art may still derive other drawings from these accompanying drawings without creative efforts.
FIG. 1 is a first structural diagram of a conference system integrating video, voice and remote collaboration according to an embodiment of the present invention;
FIG. 2A and FIG. 2B together form a second structural diagram of the conference system integrating video, voice and remote collaboration according to the embodiment of the present invention;
FIG. 3 is a schematic diagram of signal connection according to the embodiment of the present invention;
FIG. 4 is a flowchart of a system signal according to the embodiment of the present invention;
FIG. 5 is a flowchart of an audio signal according to the embodiment of the present invention;
FIG. 6 is a flowchart of a video signal according to the embodiment of the present invention;
FIG. 7 is a schematic diagram of an internal signal of a USB peripheral according to the embodiment of the present invention;

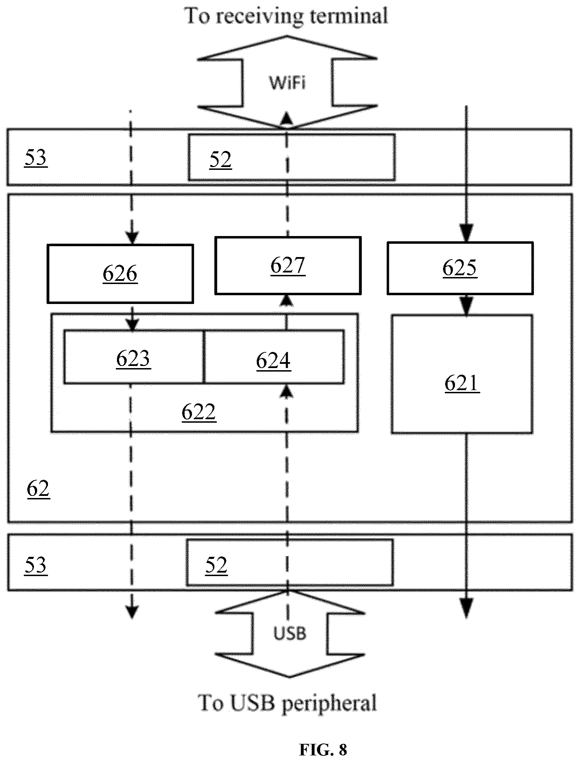

FIG. 8 is a schematic diagram of internal signal connection of a client software according to the embodiment of the present invention;
FIG. 9 is a schematic diagram of network connection between a user computer and a receiving unit as well as Internet according to the embodiment of the present invention;
FIG. 10 is a typical application diagram for a user to use the conference system according to the embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by those of ordinary skill in the art based on the embodiments of the present invention without creative efforts shall fall within the scope of protection of the present invention.

In order to make the objectives, features and advantages of the present invention more clearly, the present invention is further described in detail below with reference to the accompanying drawings and specific embodiments.

### Embodiment 1

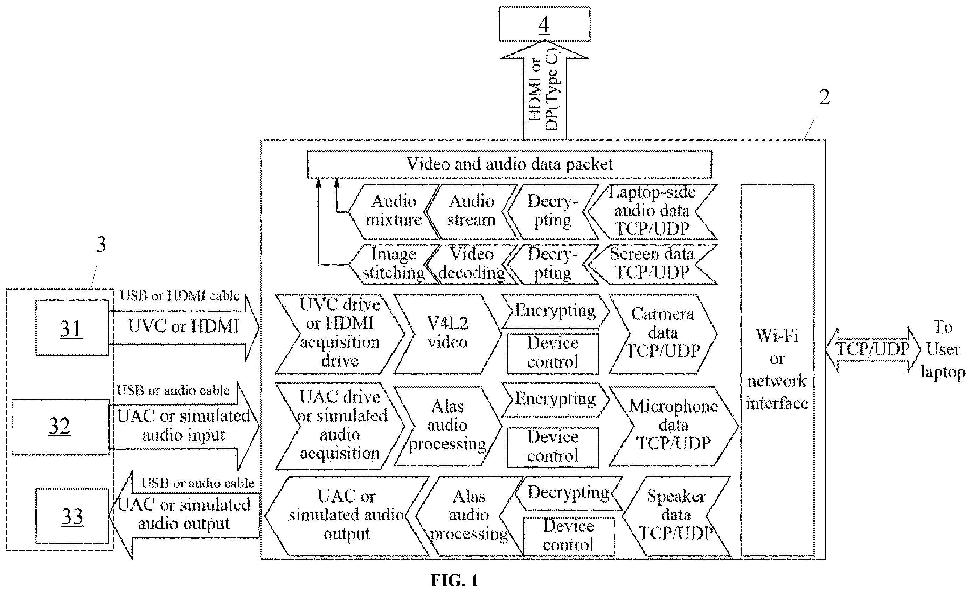

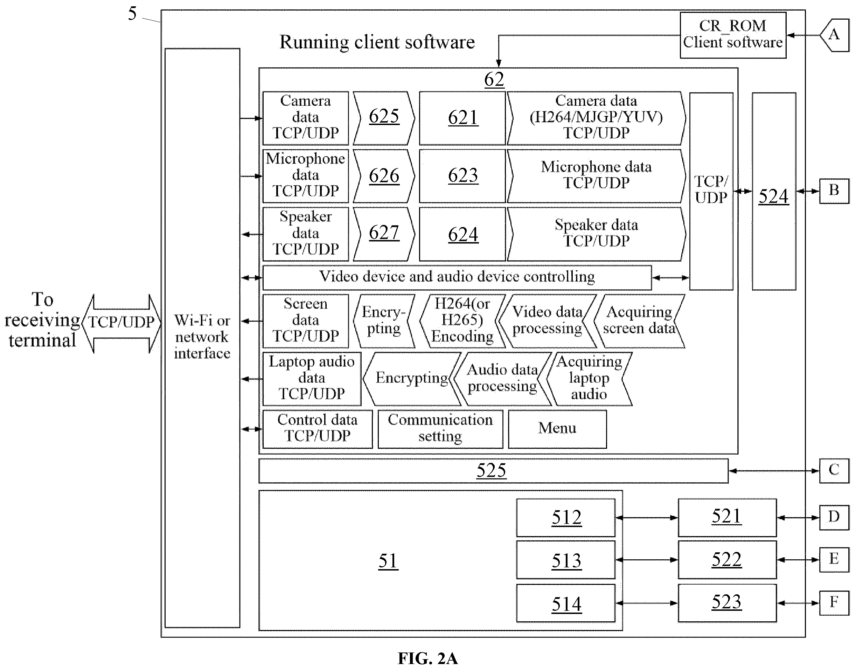

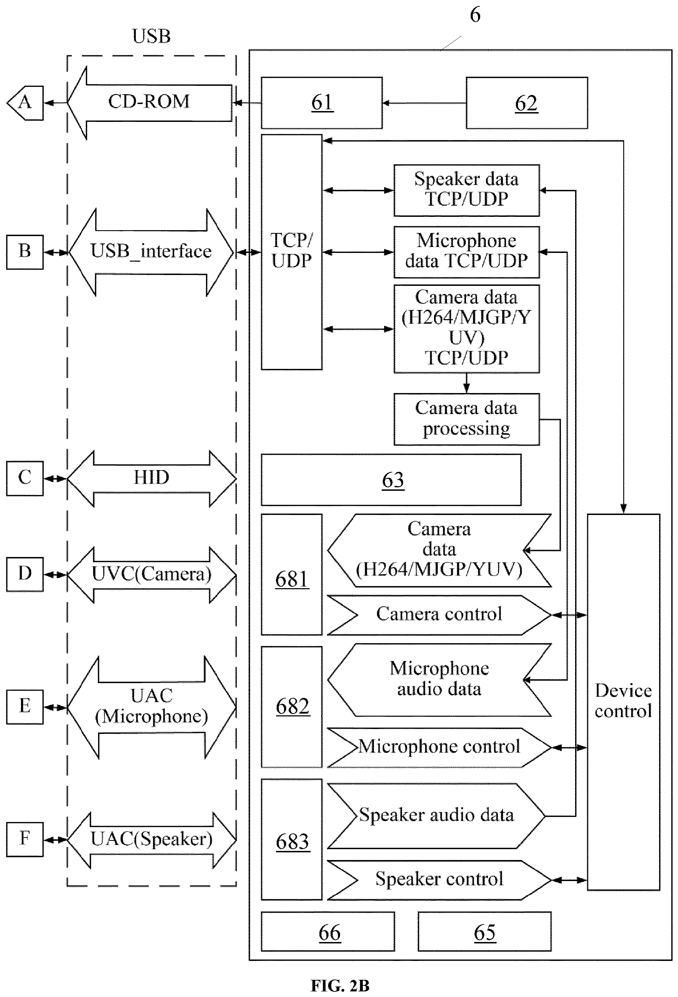

As shown in FIG. 1, and FIGs. 2A and 2B, this embodiment provides a conference system 1 integrating video, voice and remote collaboration, including:
a receiving unit 2, a conference peripheral 3, a display device 4, a user computer 5, a USB peripheral 6, and a client software 7.

The conference peripheral includes a video acquisition device 31, an audio acquisition device 32 and an audio playback device 33, and the conference peripheral is connected to the receiving unit 2 through a cable or in a wireless manner.

The display device 4 is connected to a video processing module 23 of the receiving unit 2 through audio and video cables, or the display device 4 has similar functions to the receiving unit 2.

The receiving unit 2 communicates with the user computer 5 through a communication network.

The client software 62 runs on the user computer 5 and communicates with the receiving unit 2. The client software 62 communicates with the USB peripheral through a USB port, and is configured to achieve data sharing, data conversion, conference control and remote collaboration between the receiving unit 2 and the USB peripheral 6.

The USB peripheral 6 is connected to the USB port of the user computer 5 and communicates with the client software 62 through the USB port. During communication, received and transmitted data streams, after being converted into UVC and UAC protocols by the USB peripheral device 6, are provided to the user computer 5 for use through a UVC interface and a UAC interface, respectively.

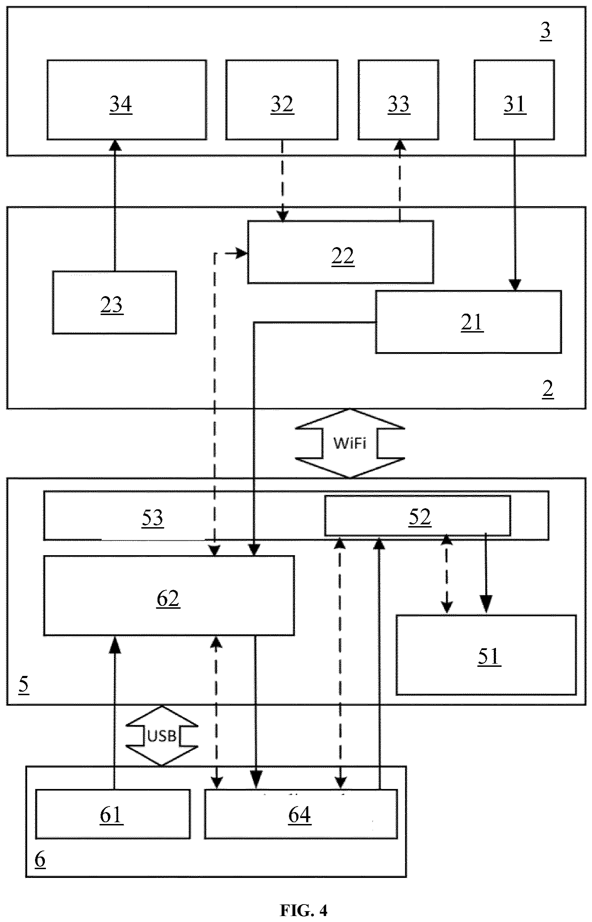

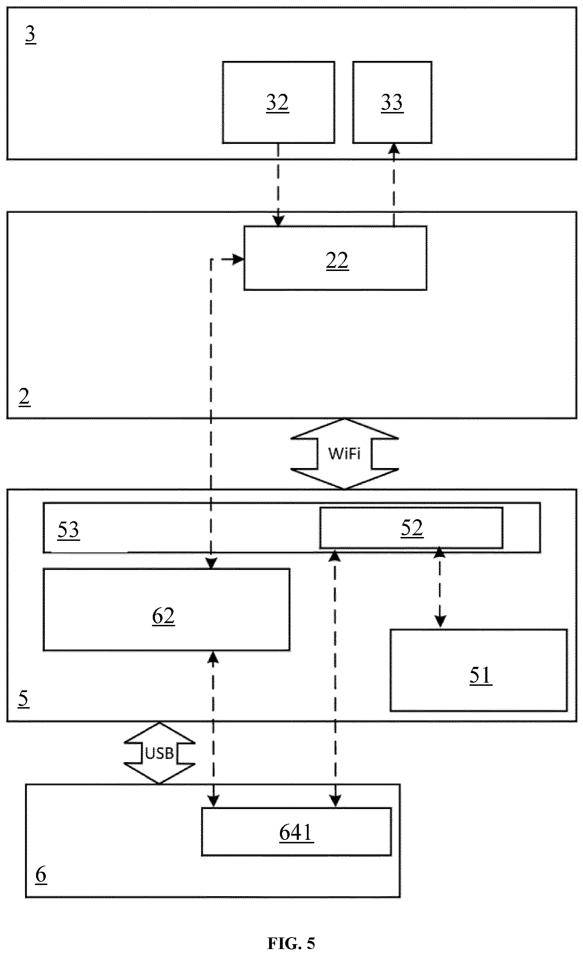

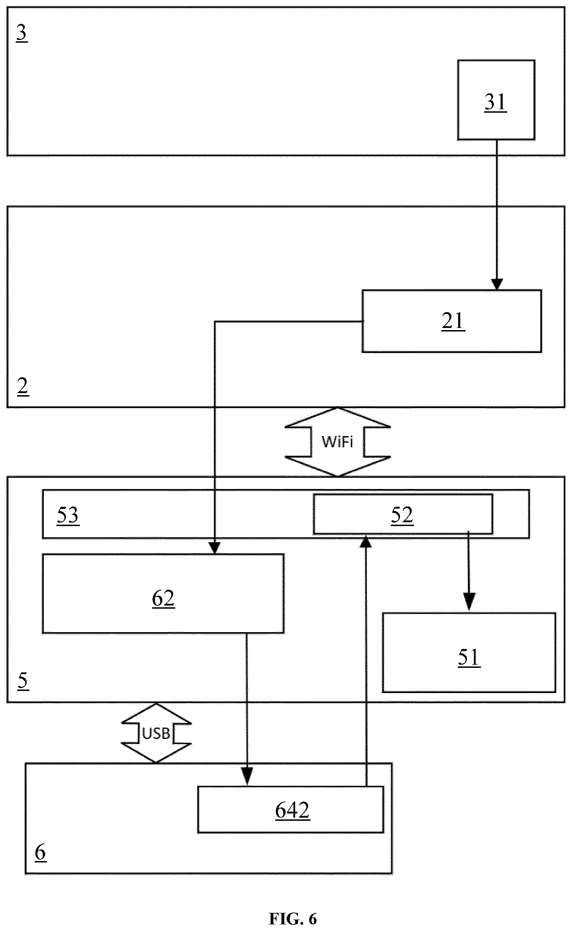

In some embodiments, the video acquisition device 31 (e.g., a video camera) in the conference peripheral 3 is connected to the receiving unit 2 through a USB cable or an HDMI cable, so as to be in communication with a video processing module 21. The audio acquisition device 32 (e.g., a microphone) is connected to the receiving unit 2 through a USB cable, an audio cable, a wireless audio receiver (e.g., a USB Bluetooth dongle, Ultra-high Frequency (UHF) -to-USB receiver) or a wireless audio transceiver built in the receiving unit 2, so as to be in communication with an audio processing module 22. The audio playback device 33 (e.g., a speaker with power amplification) is connected to the receiving unit 2 through a USB cable, an audio cable, a wireless audio receiver (e.g., a USB Bluetooth dongle, a USB to UHF transceiver), or a wireless audio transceiver built in the receiving unit 2 so as to be in communication with the audio processing module 22. Specific transmission of the system signal, audio signal and video signal are shown in FIG. 4 to FIG. 6.

The conference peripheral 3 may be a data generation device, for example, any one or more selected from a group of a display 34, a touch screen, a projector, a microphone, a speaker, a camera, a video camera, a web camera, and a photographic camera.

The video acquisition device 31 includes, for example, video camera CC2900ep of Logitech, and CAM520Pro3 of Aver.

The audio acquisition device 32 includes, for example, Speak 810 UC of Jabra, Sync 60 of Poly, EXPAND 80T of EPOS, or a video acquisition and audio acquisition integrated device includes video camera CC4000e of Logitech, and Panacast 50 of Jabra.

The receiving unit 2 communicates with the user computer 5 through a communication network, usually using wired Ethernet or using a built-in wireless network of the receiving unit 2. It is suggested to use Wi-Fi Direct technology to implement direct communication.

As shown in FIGs. 2A and 2B, the USB peripheral 6 is connected to the USB port of the user computer 5, which supports Type-A interfaces and USB C interfaces (also called Type-C) of USB2.0, USB3.0, USB4.0.

The USB peripheral 6 includes a device (e.g., USB LAN) with a USB communication interface, and UVC and UAC interfaces conforming to the standard.

The USB peripheral 6 is at least provided with a USB mass data communication interface, at least one UVC interface, and at least one UAC interface.

The USB mass data communication interface is configured to perform data exchange with the user computer 5, which may be a wired network interface card for USB to Ethernet, for example, various USB wired network interface cards, NDIS, ECM, NCM, a mass storage, e.g., a U disk, and a human interface device 63 (HID), etc.

The UVC interface is configured to exchange video data with the user computer, which may be a camera, a photographic camera, and other devices.

The UAC interface is configured to exchange audio data with the user computer, which may be a microphone, a speaker, and other devices.

The USB peripheral 6 includes multiple devices, which can be combined through a USB hub, or a USB composite device is configured to implement the combination of multiple functions.

The mass storage 61 may be an optical disk (e.g., a Compact Disk-Read Only Memory (CD-ROM) or a Digital Video Disk-Read Only Memory (DVD-ROM)), a magnetic disk (e.g., a hard disk), a solid-state memory (e.g., a USB flash disk and flash memory), a memory card (e.g., an Secure Digital (SD) card and a Trans-flash (TF) card), and a magnetic tape or the like.

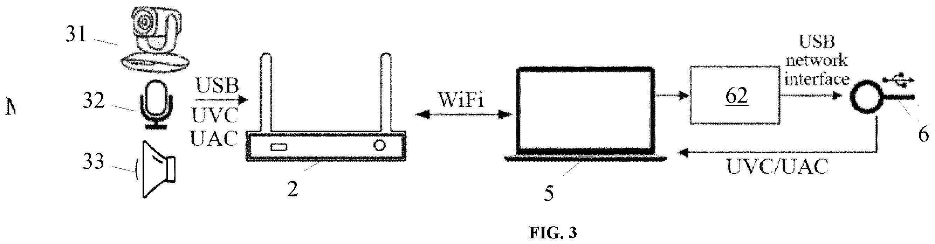

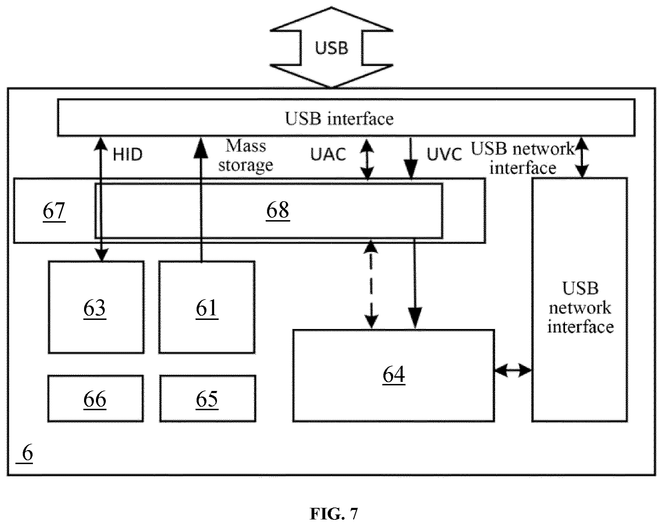

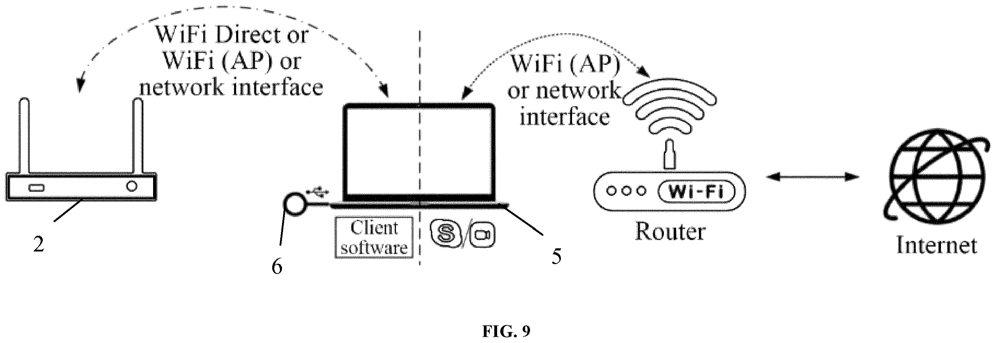

As shown in FIG. 3, the conference peripheral 3 is connected to the receiving unit 2, and the user computer 5 is connected to the receiving unit 2 via the communication network as shown in FIG. 9, the client software 62 runs on the user computer 5, and is connected to the receiving unit 2 to acquire audio and video data and control data from the conference peripheral 3, and these data are transmitted by the USB port to the USB peripheral 6. As shown in FIG. 7, the USB peripheral (e.g., USB Dongle) 6 further includes the key(s) 66, the LED(s) 65, the operating system 67, and the driver module 68 which comprises a UVC driver 681, a UAC driver 682, and a UAC driver 683. The USB peripheral is configured to convert these data into standard data of UVC/UAC devices and to transmit these data to the user computer (e.g., user laptop) at the same time. Finally, third-party instant messaging software 51 (e.g., skype) is configured to turn on the UVC and UAC devices to obtain audio and video data for various communications. USB network port interacts with the user computer 5 via USB interface.

The receiving unit 2 is configured to receive data from the conference peripheral 3 and to transmit the data to the user computer 5 through the communication network, and after the format of the data is converted by the USB peripheral 6, the data for a plug-and-play device is provided to the user computer 5. Specifically, the receiving unit 2 is configured to acquire data (video data and control data) of the video acquisition device 31 (e.g., a video camera) in the conference peripheral through a V4L2 (i.e. video for linux 2) interface, and these data are encrypted and then transmitted to the user computer through the communication network.

The receiving unit 2 is configured to acquire data (audio data and control data) of the audio acquisition device 32 (e.g., a microphone) in the conference peripheral through an Alsa (i.e. advanced linux sound architecture) interface, and these data are encrypted and then transmitted to the user computer through the communication network.

The receiving unit 2 is configured to acquire data (audio data and control data) from the user computer 5 through the communication network, and these data are decrypted and then transmitted to the audio playback device 33 (e.g., a speaker with power amplification) in the conference peripheral 3 through the Alsa interface to play sound.

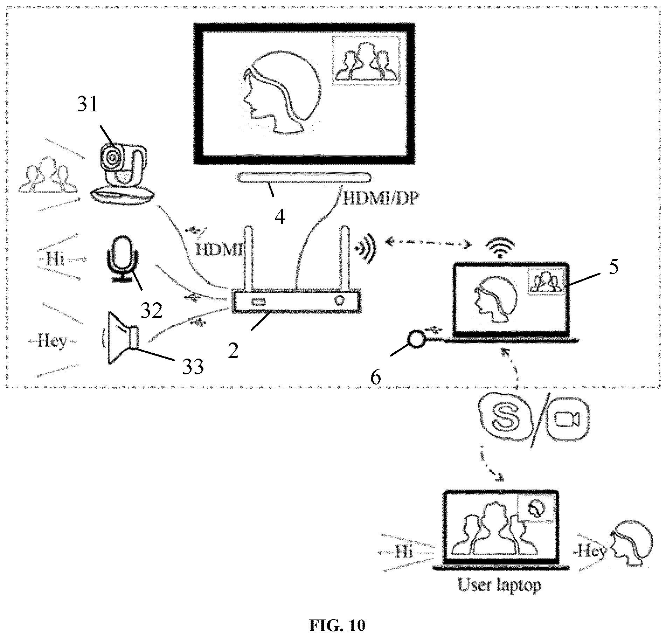

A practical application scenario is displayed in this embodiment, as shown in FIG. 10.

After the building of the system is completed, for example, the camera CC2900ep of Logitech and Speak 810 UC of Jabra are connected to the receiving unit 2 through a USB, and connected to the display 4 through the HDMI cable, e.g., MX065-V2 of SMART.

The USB peripheral 6 is inserted into the USB port of the user computer 5, the client software 62 in the CD-ROM is run and connected to the receiving unit 2, a corresponding camera 512 (e.g., meeting Camera), a microphone 513 (e.g., meeting Audio Microphone) and a speaker 514 (e.g., meeting Audio Speaker) in the third party video conferencing software 51 (e.g., Skype or Zoom) are selected to start the video conference.

### Embodiment 2

In a second aspect, the present invention provides a method of operating the conference system integrating video, voice and remote collaboration, including the following steps:
Step 1: connecting the conference peripheral 3 and the display device 4 to the receiving unit 2, and starting the receiving unit 2;
Step 2: connecting the USB peripheral 6 to the user computer 5;
Step 3: opening a mass storage 61, and running the client software 62 on the mass storage 61;
Step 4: controlling the client software 62 to be connected to the receiving unit 2 based on a communication network;
Step 5: acquiring a data stream of the conference peripheral 3, and transmitting the data stream to the USB peripheral 6 by the USB communication interface, wherein the data stream includes image data and audio data;
Step 6: transmitting the data stream to the user computer 5 according to a general protocol through the USB peripheral 6; and
Step 7: performing data sharing, data conversion, conference control and remote collaboration based on the client software 62.

Specifically, the conference peripheral 3 and the display device 4 are connected to the receiving unit 2, and the receiving unit 2 is started. Afterwards, the USB peripheral 6 is connected to the user computer 5. In this case, the user computer 5 will identify a variety of USB devices, including, but not limited to, the mass storage 61, a USB communication device (e.g., Ethernet adapter), a UVC (e.g., a camera 512), a UAC (e.g., a microphone 513, a speaker 514), HID (custom HID and universal HID) 63, etc. These devices are all plug-and-play types and use the driver module 52 (including the plug and play driver 524, the plug and play UVC driver 521, the plug and play UVC driver 522 and the plug and play UVC driver 523 and HID driver 525) that come with or are pre-installed in the operating system 53, there is no requirement for a user to install additional drivers. The mass storage 61 is opened to run the client software 62 thereon. The client software 62 will be automatically or manually connected to the receiving unit 2 through the communication network. These communication networks include Ethernet, WLAN (Wireless Local Area Network), WiMax, Wi-Fi, Wi-Fi Direct, LiFi, ultrasonic waves, LoRa, ZigBee, or Bluetooth. The communication network is preferably Wi-Fi Direct in the wireless network. The client software 62 is configured to acquire data streams such as image and audio of the conference peripheral 3 from the receiving unit 2, and sequentially transmit the data streams through decryption module 625 and camera data processing module 621 for decryption and data processing. At the same time, the audio data is sequentially transmitted through the decryption module 626 and microphone data processing module 623 within audio data processing module 622 for decryption and data processing. Then, these data streams are transmitted to the audio and video processing module 64 of the USB peripheral 6 through the USB communication interface (e.g., network interface card) for processing. The audio and video processing module 64 includes audio processing module 641 and video processing module 642. The transmitted data streams, such as image and audio, may be in an original format or in a modified format. Then, the USB peripheral device 6 is configured to transmit the image data stream (possibly including converted format) to the user computer through the UVC port in the USB. The third-party communication software 51 (e.g., Skype) can directly access this UVC device (e.g., the camera 512). Similarly, the USB peripheral 6 is configured to transmit the audio data stream (possibly including the converted format) to the user computer 5 from the UAC port of the USB interface, and the client software 62 may also directly access the UAC device (e.g., microphone 513) with the audio input. Finally, the client software 62 can directly access the UAC device (e.g., speaker) with the audio output, and transmit the audio data stream to the device. The USB peripheral 6 is configured to acquire corresponding audio data streams from the UAC port of the USB interface and to transmit the data streams to the client software 62 running on the user computer 5 through the USB communication interface (e.g., network interface card) in an opposite direction. Then, the client software 62 is configured to transmit the audio data streams sequentially through the speaker data processing module 624 within the audio data processing module 622 for processing, and subsequently through the encryption module 627 for encryption. The encrypted data stream is then transmitted to the receiving unit 2, and to finally transmit the audio data streams to the conference peripheral 3 (e.g., the UAC device Speaker), thus achieving the transmission of the audio.

In conclusion, the present invention has the following beneficial effects:
(1) In the video conference or audio conference, the USB peripheral 6 greatly improves the use convenience of the conference peripheral 3. In the condition of VoIP (i.e. Voice over Internet Protocol) call, various conference peripherals 3 connected to the receiving unit 2 can be easily activated only by plugging the USB peripheral 6 into the user computer 5 (i.e. user laptop). Both clear image captured by a professional camera and voice accurately picked up by a high-quality microphone, and good listening experience by an excellent speaker can be achieved, thus significantly improving the quality and efficiency of the conference, and providing great convenience for the participants.
(2) Centralized control interfaces of various conference peripherals are integrated on the client software interface: for the camera 31, advanced Pan/Tilt/Zoom (PTZ) control functions are integrated, including precise rotation control in the Pan and Tilt directions and Zoom operation, such that the user can accurately adjust a shooting angle and picture effect to meet the needs of diversified conference scenes; for the microphone 32, an intelligent amplification gain adjustment module and a convenient mute function are designed, where the amplification gain adjustment can dynamically optimize sound collection quality according to the acoustic environment of the conference site, and the mute function can quickly interrupt the sound input when necessary, thus ensuring the orderly conduct of the conference and the flexibility of sound management; and for the speaker 33, an intuitive and high-precision volume adjustment mechanism is constructed, making the user easily and accurately adjust the audio output volume to meet the auditory requirements of different meeting links such as speeches, discussions and multimedia playback.
(3) Through the client software 62, the user can achieve seamless collaborative control of various conference peripherals in a single interface without switching between multiple control software or remote controllers, thus significantly improving the work efficiency and operation convenience, and reshaping the interaction process and experience of the conference.
(4) The USB peripheral 6 is a plug-and-play device, the operating systems of various user computers have built-in or pre-installed driver module 52, and no additional drivers need to be installed, which not only improves the convenience, but also ensures good security and stability.
(5) When multiple USB peripherals 6 are used by multiple users, these conference peripherals 3 can be easily switched and shared. Compared with the traditional hub which has only one output port, resulting in frequent plugging/unplugging, the present invention has great convenience.

The technical features of the above embodiments can be combined at will. In order to make the description concise, not all possible combinations of the technical features in the above embodiments are described. However, it should be considered that these combinations of technical features fall within the scope of this specification provided that these combinations of technical features do not have any conflict.

Specific examples are used herein for illustration of the principles and embodiments of the present invention. The description of the embodiments is merely used to help illustrate the method and its core principles of the present invention. In addition, those of ordinary skill in the art can make various modifications in terms of specific embodiments and scope of application in accordance with the teachings of the present invention. In conclusion, the content of this specification shall not be construed as a limitation to the present invention.

## Claims

1. A conference system integrating video, voice and remote collaboration, comprising: a receiving unit, a conference peripheral, a display device, a user computer, a universal serial bus (USB) peripheral, and a client software; wherein
the conference peripheral comprises a video acquisition device, an audio acquisition device and an audio playback device, and the conference peripheral is connected to the receiving unit through a cable or in a wireless manner;
the display device is connected to the receiving unit through audio and video cables;
the receiving unit communicates with the user computer through a communication network; the client software runs on the user computer and communicates with the receiving unit; the client software communicates with the USB peripheral through a USB port, and the client software is configured to achieve data sharing, data conversion, conference control and remote collaboration between the receiving unit and the USB peripheral;
the USB peripheral is connected to the USB port of the user computer and communicates with the client software through the USB port; during communication, received and transmitted data streams, after being converted into USB video class (UVC) and USB audio class (UAC) protocols by the USB peripheral device, are provided to the user computer for use through a UVC interface and a UAC interface, respectively.

2. The conference system integrating video, voice and remote collaboration according to claim 1, wherein the video acquisition device is connected to the receiving unit through a USB cable or a high definition multimedia interface (HDMI) cable; the audio acquisition device is connected to the receiving unit through the USB cable, an audio cable, a wireless audio receiver or a wireless audio transceiver built in the receiving unit; and the audio playback device is connected to the receiving unit through the USB cable, the audio cable, the wireless audio receiver, or the wireless audio transceiver built in the receiving unit.

3. The conference system integrating video, voice and remote collaboration according to claim 2, wherein the conference peripheral comprises any one or more selected from a group of a display, a touch screen, a projector, a microphone, a speaker, a camera, a video camera, a web camera and a photographic camera.

4. The conference system integrating video, voice and remote collaboration according to claim 3, wherein the USB port comprises type interfaces of USB 2.0 series, USB 3.0 series and USB 4.0 series.

5. The conference system integrating video, voice and remote collaboration according to claim 4, wherein the USB peripheral at least comprises a USB mass data communication interface, at least one UVC interface, and at least one UAC interface.

6. The conference system integrating video, voice and remote collaboration according to claim 5, wherein the USB mass data communication interface comprises a wired network interface card, a network driver interface specification (NDIS), an Ethernet control model (ECM), a network control model (NCM), a mass storage, and a human interface device.

7. The conference system integrating video, voice and remote collaboration according to claim 6, wherein the video acquisition device comprises a universal UVC device, or a video acquisition device with an HDMI output.

8. The conference system integrating video, voice and remote collaboration according to claim 7, wherein the audio acquisition device comprises a universal UAC device, an audio acquisition device with a simulated or digital audio input, and an audio playback device with a simulated or digital audio output.

9. The conference system integrating video, voice and remote collaboration according to claim 8, wherein the video acquisition device and the audio acquisition device are an integrated device, or separated devices.

10. A method of operating the conference system integrating video, voice and remote collaboration according to any one of claims 1 to 9, comprising:
connecting the conference peripheral and the display device to the receiving unit, and starting the receiving unit;
connecting the USB peripheral to the user computer;
opening a mass storage, and running the client software on the mass storage;
controlling the client software to be connected to the receiving unit based on the communication network;
acquiring a data stream of the conference peripheral, and transmitting, by the USB communication interface, the data stream to the USB peripheral, wherein the data stream comprises image data and audio data;
transmitting the data stream to the user computer according to a general protocol through the USB peripheral; and
performing data sharing, data conversion, conference control and remote collaboration based on the client software.
